# EUROPÄISCHE PATENTSCHRIFT

(11) **EP 1 214 802 B1**
(45) Veröffentlichungstag und Bekanntmachung des Hinweises auf die Patenterteilung: **19.11.2003**
(21) Anmeldenummer: 00931000.4
(22) Anmeldetag: 03.04.2000
(51) Int. Cl.: H04B 7/26, H04L 12/28, H04L 12/56

(54) **SIGNALISIERUNGSVERFAHREN IM RACH-KANAL**
SIGNALLING SYSTEM IN A RACH CHANNEL
PROCEDE DE SIGNALISATION DANS UN CANAL D'ACCES ALEATOIRE

(30) Priorität: 09.04.1999 DE 19916069
(43) Veröffentlichungstag der Anmeldung: 19.06.2002
(73) Patentinhaber: SIEMENS AKTIENGESELLSCHAFT, 80333 München (DE)
(72) Erfinder: GRUHN, Thomas, D-12109 Berlin (DE); SCHINDLER, Jürgen, D-10555 Berlin (DE); PLOGSTIES, Jens, D-12524 Berlin (DE); WEGNER, Frank, D-13407 Berlin (DE); GESSNER, Christina, D-13587 Berlin (DE); LEHMANN, Gerald, D-12101 Berlin (DE)
(86) Internationale Anmeldenummer: DE0001010
(87) Internationale Veröffentlichungsnummer: WO00062446

(56) Entgegenhaltungen:
- WO-A-97/46041
- US-A- 5 822 359
- US-A- 5 850 392
- CATT: "TD-SCDMA Radio Transmission Technology For IMT-2000 Candidate submission Draft V.0.4" IMT-2000 RADIO TRANSMISSION TECHNOLOGY (RTT) PROPOSALS, [Online] 23. September 1988 (1988-09-23), XP002146256 Gefunden im Internet: <URL:www.itu.int> [gefunden am 2000-08-31] in der Anmeldung erwähnt

## Beschreibung

Die Erfindung betrifft ein Verfahren zur Signalisierung in einem Kanal mit willkürlichem Zugriff (RACH) eines Funk-Kommunikationssystems und eine derartig ausgebildete Teilnehmerstation.

In Funk-Kommunikationssystemen werden Nachrichten (beispielsweise Sprache, Bildinformation oder andere Daten) als Signale mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Zur Teilnehmerseparierung auf der Funkschnittstelle können unterschiedliche Verfahren benutzt werden. Bekannt sind FDMA (frequency division multiple access), TDMA (time division multiple access), CDMA (code division multiple access) und SDMA (space division multiple access) Verfahren, die die Signale der einzelnen Teilnehmerstationen anhand der Trägerfrequenz, anhand eines von mehreren Zeitschlitzen innerhalb eines Rahmens, anhand eines teilnehmerindividuellen Spreizkodes oder anhand der Richtcharakteristik des Empfangs bzw. der Abstrahlung der Basisstation unterscheiden.

Die Verfahren können miteinander kombiniert werden. So ist aus "TD-SCDMA Radio Transmission Technology for IMT-2000, Draft V.0.4, der CATT vom September 1998, ein Teilnehmerseparierungsverfahren bekannt, das FDMA, TDMA, CDMA und SDMA miteinander kombiniert.

In Funk-Kommunikationssystemen wird ein Kanal mit willkürlichem Zugriff (RACH random access channel) benötigt, um den Erstzugriff von Teilnehmerstationen auf die Funkschnittstelle durchzuführen, also bevor funktechnische Ressourcen dieser Teilnehmerstation zugeteilt wurden.

Ein Kanal zum willkürlichem Zugriff eines Funk-Kommunikationssystems zeichnet sich dadurch aus, daß der Zugriff auf diesen Kanal nicht koordiniert ist. Die Teilnehmerstationen einer Funkzelle können diesen Kanal ohne vorherige Zuteilung nutzen, um beispielsweise eine darauffolgende Zuteilung von funktechnischen Ressourcen, z.B. beim Verbindungsaufbau anzufordern.

Durch den unkoordinierten Zugriff kommt es jedoch zu Kollisionen zwischen den Aussendungen der einzelnen Teilnehmerstationen. Wenn sich bei einer empfangenden Basisstation die Aussendungen mehrerer Teilnehmerstationen überlagern, dann sind die Aussendungen nicht mehr detektierbar und die Teilnehmerstationen erhalten damit auch keine Quittierung der Aussendung. Nach einer Kollision versuchen die Teilnehmerstationen erneut, im Kanal für den willkürlichem Zugriff zu senden. Je häufiger der Zugriff wiederholt werden muß, um so länger ist die Wartezeit und um so mehr sinkt die Effizienz dieses Zugriffsverfahrens.

Die Erfolgswahrscheinlichkeit liegt bei Simulationen des Zugriffsverfahrens auf den Kanal mit willkürlichem Zugriff nach "TD-SCDMA Radio Transmission Technology for IMT-2000, Draft V.0.4, der CATT vom September 1998, S.29-30, nur bei ca. 5%. Dies bedeutet insbesondere bei einer Paketdatenübertragung eine Einschränkung, die dazu führt, daß die Leistungsfähigkeit des Funk-Kommunikationssystems aufgrund zu langer Wartezeiten bis zur Ressourcenzuteilung stark sinkt.

Aus der US 5,850,392 ist ein Verfahren für ein TDMA-basiertes Funkkommunikationssystem bekannt, bei dem Signale für einen willkürlichen Zugriff in einem CDMA-Zugriffskanal übertragen werden, währenddessen Kommunikationssignale über TDMA-Übertragungskanäle übertragen werden.

Der Erfindung liegt die Aufgabe zugrund, die Signalisierung im Kanal mit willkürlichem Zugriff zu verbessern und die Effizienz zu steigern. Diese Aufgabe wird durch das Verfahren mit den Merkmalen des Anspruchs 1 und die Teilnehmerstation mit den Merkmalen des Anspruchs 15 gelöst. Vorteilhafte Weiterbildungen der Erfindung sind den Unteransprüchen zu entnehmen.

Beim erfindungsgemäßen Verfahren zur Signalisierung in einem Kanal mit willkürlichem Zugriff eines Funk-Kommunikationssystems kann eine Teilnehmerstation unter mehreren Sendezeitpunkten für die Synchronisationssequenzen innerhalb des Kanals mit willkürlichem Zugriff auswählen, wobei anschließend ein oder mehrere Sendezeitpunkte zur Übertragung von Synchronisationssequenzen benutzt werden.

Entgegen "TD-SCDMA Radio Transmission Technology for IMT-2000, Draft V.0.4, der CATT vom September 1998, S.29-30, bei dem nur eine Synchronisationssequenz zu einem vorgegebenen Zeitpunkt gesendet wird, erreicht das erfindungsgemäße Verfahren eine geringere Wahrscheinlichkeit von Kollisionen, da die Synchronisationssequenzen von mehreren nicht koordiniert sendenden Teilnehmerstationen seltener gleichzeitig eintreffen und sich ggf. nur teilweise überlappen. Im einfachsten Fall schafft eine bewußte Separierung der Empfangszeitpunkte von einzelnen gesendeten Synchronisationssequenzen unterschiedlicher Teilnehmerstationen eine Verbesserung. Damit wird die Wahrscheinlichkeit der Auswertbarkeit der Aussendungen der Teilnehmerstation wesentlich erhöht. Je nach Kombination der im folgendenden genannten Detailmaßnahmen kann die Erfolgswahrscheinlichkeit der Auswertung bis zu einem Faktor von 10 erhöht werden.

Durch das erfindungsgemäße Verfahren werden auch Wiederholungen des Erstzugriffs vermieden und die Vermittlungszeit bis zur Zuteilung von funktechnischen Ressourcen in anderen Kanälen verkürzt. Die zur Verfügung stehenden Ressourcen können damit effektiver genutzt werden.

Nach vorteilhaften Ausgestaltungen der Erfindung sendet die Teilnehmerstation zu mehreren Sendezeitpunkten die gleiche Synchronisationssequenz oder unterschiedliche Synchronisationssequenzen. Auch bei Nichtdetektierbarkeit einer einzelnen Synchronisationssequenz in der Basisstation, z.B. verursacht durch die Fadingeigenschaft eines Mehrwegekanals, kann der Erstzugriff erfolgreich durchgeführt werden. Die durch das mehrfache Aussenden entstehende Redundanz erhöht die Wahrscheinlichkeit der richtigen Detektion bereits beim ersten Zugriff auf den Kanal mit willkürlichem Zugriff.

Werden unterschiedliche Synchronisationssequenzen verwendet, so besteht nach weiteren Ausbildungen der Erfindung die Möglichkeit, durch die Abfolge der Synchronisationssequenzen eine Information zu übertragen (damit wird Kapazität bei weiteren Signalisierungen eingespart) oder durch eine willkürliche Wahl der Abfolge der Synchronisationssequenzen auch bei gleichzeitigen Aussendungen mehrerer Teilnehmerstationen die Detektion von zumindest zwei unterschiedlichen Synchronisationssequenzen zu garantieren, da es bei einer willkürlichen Wahl der Abfolge unwahrscheinlich ist, daß zwei Teilnehmerstationen die gleiche Abfolge wählen.

Eine weitere Verringerung der Kollisionswahrscheinlichkeit entsteht, wenn der oder die Sendezeitpunkte von der Teilnehmerstation willkürlich gewählt wird. Damit entsteht eine weitgehend stochastische Verteilung der Empfangszeitpunkte mit einer geringen Kollisionswahrscheinlichkeit.

Ein besonders bedeutsamer Anwendungsfall des erfindungsgemäßen Verfahrens liegt vor, wenn die Aussendungen der Teilnehmerstationen von der Basisstation ausgewertet werden und durch die Basisstation eine richtungsselektive Antwort zu den einzelnen Teilnehmerstationen gesendet wird. Die richtungsselektive Antwort läßt eine wesentlich größere Kapazität für die Signalisierung in Abwärtsrichtung und für einen späteren Empfang in Aufwärtsrichtung zu. Deshalb ist die Aufwärtsrichtung mit dem Erstzugriff, der noch omnidirektional und nicht richtungsselektiv ist, ein Nadelöhr für die Kapazität des Funk-Kommunikationssystems. Eine Verbesserung der Erfolgswahrscheinlichkeit des Erstzugriffs verbessert die Gesamtkapazität eines solchen Funk-Kommunikationssystems entscheidend.

Es ist weiterhin vorteilhaft, daß von der Basisstation bei erkannten Kollisionen von Aussendungen zweier Teilnehmerstationen mit gleicher Synchronisationssequenz eine Aufforderung zum erneuten Senden übertragen wird. Damit zeigt die Basisstation den Teilnehmerstationen an, daß zumindest teilweise die Detektion der Synchronisationssequenzen nicht erfolgreich war. Bei einem wiederholten Aussenden der Synchronisationssequenzen durch die Teilnehmerstationen werden dann andere Sendezeitpunkte, Synchronisationssequenzen oder Abfolgen von Synchronisationssequenzen gewählt. Insbesondere ist es vorteilhaft, wenn die Aufforderung den Sendezeitpunkt und/oder die Synchronisationssequenz der Kollision beinhaltet, so daß nur eine Untermenge der Teilnehmerstationen antwortet und die bereits detektierten Teilnehmerstationen nicht durch wiederholtes Senden die Detektion für die übrigen Teilnehmerstationen gefährden.

Eine große Auswahl an Sendezeitpunkten mit geringer Überlappungswahrscheinlichkeit entsteht, wenn die Synchronisationssequenzen kurz sind, z.B. im Vergleich zur Länge eines Zeitschlitzes. Es ist nach einer Weiterbildung der Erfindung vorteilhaft, daß erst bei folgenden Aussendungen der Teilnehmerstation, die von der Basisstation gerichtet empfangen werden, Informationen von Schichten 2 oder 3 des OSI-Schichtenmodells übertragen werden. Der Erstzugriff beschränkt sich somit auf wenige Chips, z.B. 40-80 Chips, die keine oder nur wenige Informationen enthalten.

Unabhängig von der Wahl der Sendezeitpunkte ist es vorteilhaft, daß die Basisstation in einem Organisationskanal den Teilnehmerstationen signalisiert, ob Antennen mit veränderbarer Richtcharakteristik verfügbar sind. Solche Antennen mit veränderbarer Richtcharakteristik, die ein richtungsselektives Abstahlen ermöglichen, sind aufwendig, und evtl. nicht im gesamten Funk-Kommunikationssystem verfügbar. Sind keine Antennen mit veränderbarer Richtcharakteristik verfügbar, dann sollten andere Verfahren für den Erstzugriff angewendet werden, da sonst die Wahrscheinlichkeit für Kollisionen beim Erstzugriff zu hoch ist. Alternative Verfahren für den Erstzugriff sind:
- Funkblöcke halber oder ganzer Zeitschlitzlänge mit Informationsgehalt und Mittambel,
- Synchronisation anhand kurzer Sequenzen, die mit einem Korrelationsempfänger detektiert werden.

Nach Auswertung der Signalisierung wählen die Teilnehmerstationen zwischen zumindest zwei Zugriffsverfahren im Kanal mit willkürlichem Zugriff aus. Das Verfahren für den Erstzugriff ist damit flexibel und in jeder Funkzelle adaptiv anpaßbar.

Weiterhin ist es vorteilhaft, wenn die Funkschnittstelle nach einer TDD-Separierung der Übertragungsrichtungen organisiert ist und damit besonders asymmetrische Datenübertragungen unterstützt werden können. Hierbei ist es vorteilhaft, daß die Synchronisationssequenzen zumindest teilweise im Übergang von der Abwärts- zur Aufwärtsrichtung gesendet werden. Aus Interferenzgründen ist zwischen den Übertragungsrichtungen der Schutzabstand größer und die Teilnehmerstationen haben die Möglichkeit diesen vergrößerten Schutzabstand als Kanal mit willkürlichem Zugriff zu nutzen. Sind der Zeitschlitz des Kanals mit willkürlichem Zugriff und der vergrößerte Schutzabstand benachbart, so ergeben sich besonders günstige Lösungsmöglichkeiten durch eine größere Vielfalt an Sendezeitpunkten.

Ausführungsbeispiele der Erfindung werden anhand der beiliegenden Zeichnungen näher erläutert.

Dabei zeigen
- Fig 1: ein Funk-Kommunikationssystem,
- Fig 2: eine Funkschnittstelle,
- Fig 3: einen Zugriff auf den RACH nach dem Stand der Technik,
- Fig 4-9: erfindungsgemäße Signalisierungsverfahren im RACH, und,
- Fig 10: einen schematischen Aufbau einer Teilnehmerstation.

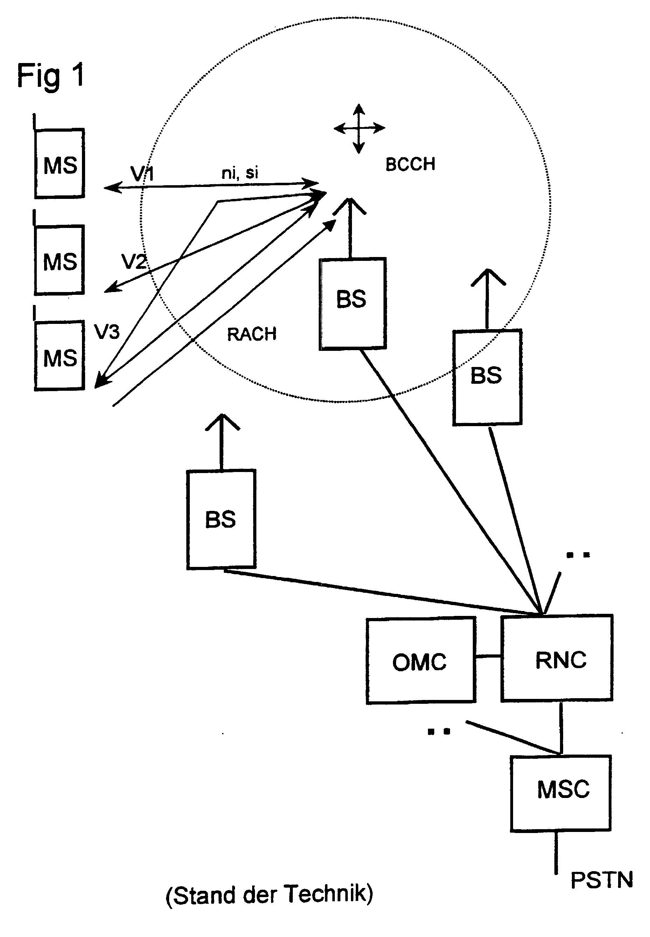

Das in Fig 1 dargestellte Mobilfunksystem als Beispiel eines Funk-Kommunikationssystems besteht aus einer Mehrzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zur Steuerung der Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In Fig 1 sind beispielhaft Verbindungen V1, V2, V3 zur Übertragung von Nutzinformationen ni und Signalisierungsinformationen si als Punkt-zu-Punkt-Verbindungen zwischen Teilnehmerstationen MS und einer Basisstation BS, ein Organisationskanal BCCH als Punkt-zu-Multipunkt-Verbindung von der Basisstation BS zu den Teilnehmerstationen MS und einer Kanal RACH mit willkürlichem Zugriff von den Teilnehmerstationen MS zur Basisstation BS dargestellt.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Die Basisstationen BS umfassen Antennen mit veränderbarer Richtcharakteristik, so daß nach einer Richtungsbestimmung für den Empfang und für bestimmte Aussendungen eine gezielte Ausrichtung des Richtcharakteristik auf eine Teilnehmerstation MS erfolgen kann. Der Organisationskanal BCCH wird omnidirektional gesendet und die ersten Zugriffe der Teilnehmerstationen MS im Kanal RACH mit willkürlichem Zugriff werden auch omnidirektional empfangen. Die übrigen Aussendungen der Basisstation BS und der Empfang wird ansonsten richtungsselektiv durchgeführt. Dies betrifft auch die dem erfolgreichen Erstzugriff folgenden Aussendungen im Kanal RACH mit willkürlichem Zugriff. Da ggf. eine Basisstation BS keine Antennen mit veränderbarer Richtcharakteristik aufweist, wird im Organisationskanal BCCH eine Information in Form eines Flags gesendet, die den Teilnehmerstationen anzeigt, welchen Antennentyp die Basisstation hat. Im folgenden wird in den Ausführungsbeispielen der Erfindung nur Bezug auf die Zugriffsverfahren bei Antennen mit veränderbarer Richtcharakteristik genommen. Alternative Zugriffsverfahren sind in DE 198 17 771 gezeigt.

Die Funkschnittstelle ist als eine breitbandige Funkschnittstelle, B = 1,6 MHz (somit 3 x Frequenzbänder pro 5 MHz), mit einer Rahmendauer von 5 oder 10 ms und 10 Zeitschlitzen ts0..ts9 pro Rahmen fr, sowie mit CDMA-Teilnehmerseparierung (Code Division Multiple Access) unter Nutzung von 16 verschiedenen Spreizkodes c0 bis c15 ausgebildet.

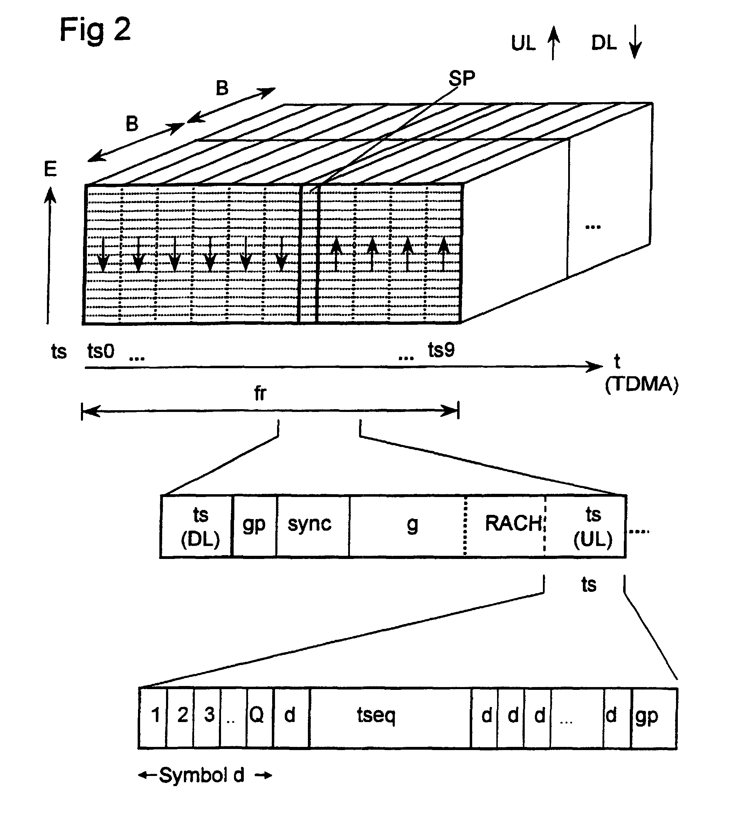

Nach Fig 2 (nicht maßstabsgemäß) wird ein Teil der Zeitschlitze ts0..ts5 gemäß einem TDD (time division duplex) Verfahren in Abwärtsrichtung DL genutzt, der Rest ts6..ts9 in Aufwärtsrichtung UL. Anschließend an den letzten Zeitschlitz ts5 in Abwärtsrichtung DL wird nach einer Schutzzeit gp ein Sequenz sync für die Teilnehmerstationen MS zu deren Synchronisation gesendet. Es folgt eine Schutzzeit g zur Separation der Übertragungsrichtungen DL, UL während des Umschaltpunktes SP innerhalb des Rahmens fr.

Der erste Zeitschlitz ts6 in Aufwärtsrichtung UL ist der Kanal RACH mit willkürlichem Zugriff, dann folgen Zeitschlitze ts für Verkehrskanäle in Abwärtrichtung DL. Die übertragenen Daten in einem Verkehrskanal sind mit einem individuellen Spreizkode c0..c15 gespreizt, der Q Chips pro Symbol enthält, wobei in die Daten eine Mittambel tseq zur Kanalschätzung eingebettet ist. Auch die Funkblöcke der Verkehrskanäle werden mit einer Schutzzeit gp abgeschlossen.

Die Schutzzeit g zur Separierung der Übertragungsrichtungen DL, UL oder ein Teil davon kann nach einem Ausführungsbeispiel der Erfindung zusätzlich für den Kanal RACH mit willkürlichem Zugriff genutzt werden. Damit erhält dieser Kanal RACH, z.B. für Paketdatenanwendungen, eine erhöhte Kapazität.

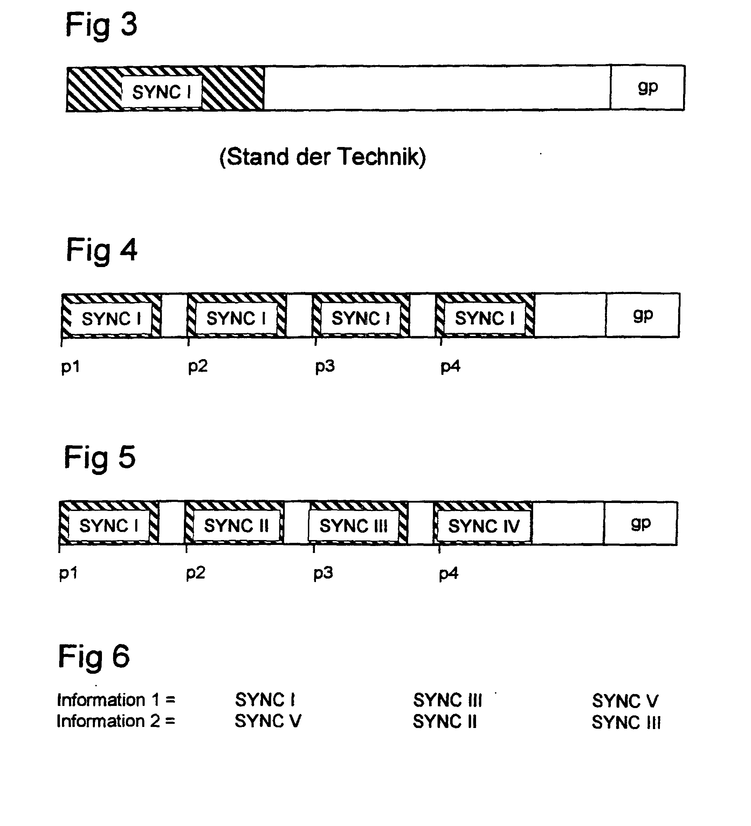

Das Verfahren zur Signalisierung im Kanal RACH mit willkürlichem Zugriff nach Fig 3 ist aus "TD-SCDMA Radio Transmission Technology for IMT-2000", Draft V.0.4, der CATT vom September 1998, S.29-30, bekannt. Innerhalb eines Zeitschlitzes, der durch eine Schutzzeit gp zur Vermeidung von Überlappungen mit Aussendungen in folgenden Zeitschlitzen abgeschlossen ist, wird zu einem fest vorgegebenen Zeitpunkt von der Teilnehmerstation MS eine der Basisstation BS bekannte Synchronisationssequenz SYNC I gesendet. Ein Korrelationsempfänger der Basisstation BS wertet Empfangssignale aus und führt eine Korrelation mit der ihr bekannten Synchronisationssequenz SYNC I durch. Ist die Synchronisationssequenz SYNC I im Empfangssignal enthalten, so detektiert der Korrelationsempfänger eine Korrelationsspitze zu einem bestimmten Zeitpunkt.

Weiterhin kann die Basisstation BS die Richtung bestimmen, aus der die Synchronisationssequenz SYNC I gesendet wurde.

Nach Fig 4 ist eine Synchronisationssequenz SYNC I verkürzt (damit wird Signalisierungsoverhead eingespart) auf 80 Chips und wird wiederholt zu unterschiedlichen Sendezeitpunkten p1..p4 von der Teilnehmerstation MS zum Erstzugriff im Kanal RACH mit willkürlichem Zugriff (Spreizkode c0) gesendet. Die Basisstation BS detektiert die Synchronisationssequenzen SYNC 1. Auch bei Verlust einer, zwei oder drei Synchronisationssequenzen SYNC I durch Kollision oder Fading kann die Teilnehmerstation MS und ihre Richtung erkannt werden. Die Redundanz wird in Abhängigkeit von der Länge der Synchronisationssequenz SYNC I um ein Vielfaches erhöht und damit die Wahrscheinlichkeit einer sicheren Detektion erhöht. Erst bei kompletter Kollision aller Synchronisationssequenzen SYNC I einer Teilnehmerstation MS bleibt der Erstzugriff erfolglos.

Desweiteren, siehe Fig 5, besteht die Möglichkeit, nicht die gleichen Synchronisationssequenzen SYNC I innerhalb eines Zeitschlitzes zu wiederholen, sondern andere Synchronisationssequenzen SYNC II..IV einzusetzen. Die Teilnehmerstation MS wählt entweder zufällig die Abfolge der Synchronisationssequenzen SYNC I..IV oder wählt die Abfolge entsprechend eines zu signalisierenden Informationsgehaltes, siehe Fig 6. Die Information (z.B. die Identifikation der Teilnehmerstation MS) liegt in der Wahl der Synchronisationssequenzen SYNC I..IV oder ihrere Abfolge.

Empfängt die Basisstation BS mehrere unterschiedliche Synchronisationssequenzen SYNC I..IV gleichzeitig, so führt diese Kollision nicht zu einer Unmöglichkeit der Detektion, da zwei parallel Korrelationen mit den unterschiedlichen Synchronisationssequenzen SYNC I..IV diese trennen können.

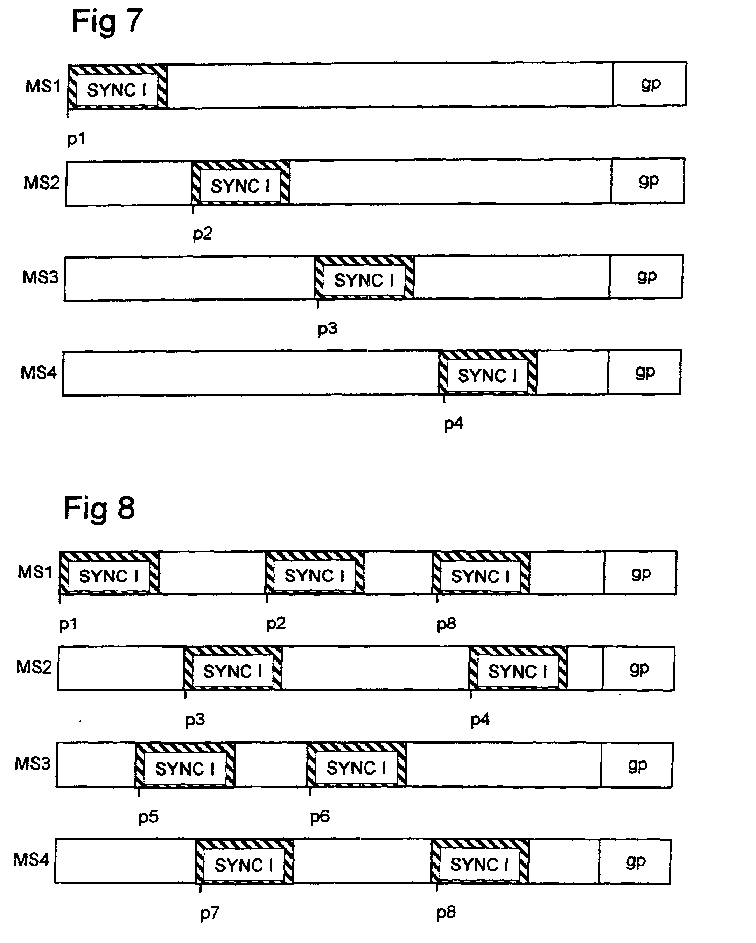

Fig 7 zeigt ein weiteres Ausführungsbeispiel der Erfindung. Es wird pro Teilnehmerstation MS nur eine einzige Synchronisationssequenz SYNC I gesendet (damit weniger Interferenzen), doch werden von den Teilnehmerstationen MS1..MS4 unterschiedliche Sendezeitpunkte p1..p8 gewählt, die damit auch zu unterschiedlichen Empfangszeitpunkten bei der Basisstation BS führen und Kollisionen vermeiden helfen. Sind die Synchronisationssequenzen SYNC I..IV ausreichend kurz, so können bis zu acht Synchronisationssequenzen SYNC I..IV ohne Kollision in einem Zeitschlitz empfangen werden. Die Synchronisationssequenzen SYNC I..IV enthalten in diesem Fall 5 Symbole = 80 Chips (Q=16 Chips pro Symbol), von denen 48 Chips die eigentliche Sequenz darstellen und 32 Chips als zusätzliche Schutzzeit innerhalb der Synchronisationssequenzen SYNC I..IV dienen. Es entstehen damit pro Zeitschlitz zumindest acht Kollisionsgruppen, bei der Benutzung unterschiedlicher Synchronisationssequenzen SYNC I..IV entsprechend mehr Gruppen.

Die Wahl der Sendezeitpunkte p1..p8 kann nach Fig 8 auch zufällig sein und nicht aus einer Menge klar gegliederter Möglichkeiten entnommen sein. Es kommt damit seltener zu vollständigen Kollisionen. Bei nur teilweisen Kollisionen sind die Synchronisationssequenzen SYNC I häufig trotzdem getrennt detektierbar. Durch die wiederholte Aussendung der Synchronisationssequenzen SYNC I wird die Detektierbarkeit zumindest einer Synchronisationssequenzen SYNC I pro Teilnehmerstation MS weiter erhöht.

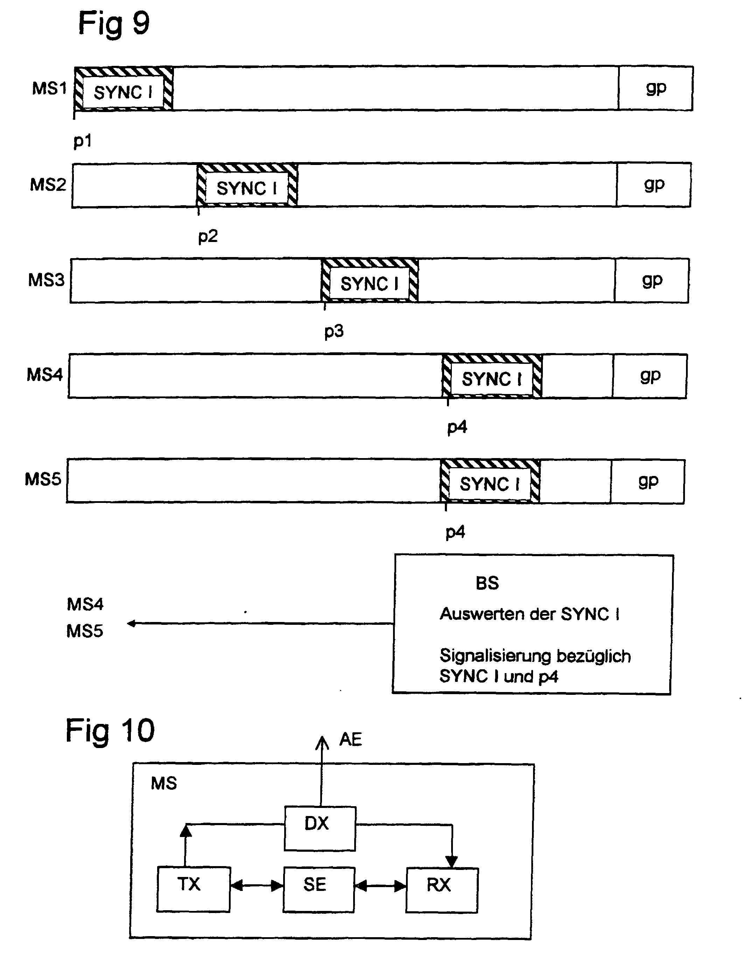

Kommt es, siehe Fig 9 Teilnehmerstationen MS4 und MS5, trotzdem zu einer Kollision, die die Detektion verhindet, so signalisiert die Basisstation BS die Kollision den Teilnehmerstationen MS. Dies erfolgt durch Anzeige der betroffenen Synchronisationssequenz SYNC I und des Sendezeitpunktes p4, der mit dem Kollisionszeitpunkt korrespondiert. Damit können die Teilnehmerstationen MS4 und MS5 nachvollziehen, daß ihre Aussendungen von der Kollision betroffen waren und eine erneute Aussendung nach einer willkürlich gewählten Pause und ggf. mit veränderten Sendezeitpunkt p1..p8 bzw. veränderter Synchronisationssequenz SYNC I..IV durchgeführt wird. Die übrigen Teilnehmerstationen MS1..MS3 wiederholen den Erstzugriff nicht.

Nach erfolgreicher Detektion des Erstzugriffs sendet die Basisstation BS in die für jede detektierte Synchronisationssequenz SYNC I..IV bestimmte Richtung eine Aufforderung an die betreffende Teilnehmerstation MS, weitere Informationen der OSI-Schichten 2 und 3 zu senden, die dann mit einem anderen Spreizkode c1 bis c15 zur Basisstation BS im Kanal mit willkürlichem Zugriff RACH übertragen werden. Die weitere Informationen (layer 2/3 Pakete) der OSI-Schichten 2 und 3 enthalten Angaben zur Identifikation der Teilnehmerstation MS, ihrer Leistungsfähigkeit (Sprache, Daten etc.), ihrer Sendeleistungsklasse, dem angeforderten Dienst und zur Vorhaltzeit (timing advance). Die weiteren Aussendungen im RACH werden Richtungsselektiv empfangen, so daß Kollisionen weitgehend ausgeschlossen werden können.

Die Sendeleistung mit der die Synchronisationssequenzen SYNC I..IV von den Teilnehmerstationen MS gesendet werden, ist nicht entsprechend der Empfangsleistung des Organisationskanal abgestimmt, sondern folgt entsprechend DE 198 58 725 einer Einstellung, die den sogenannten "Capture Effect" ausnutzt, so daß auch bei einer vollständigen Kollision sich ggf. eine Synchronisationssequenz SYNC I..IV durchsetzt.

Der Aufbau einer Teilnehmerstation MS zur Durchführung des erfindungsgemäßen Verfahrens ist in Fig 10 gezeigt, wobei vereinfacht die Teilnehmerstation MS eine Antenne AE, einen Duplexer DX zur Trennung der Signale in Aufwärts- UL und Abwärtsrichtung DL, eine Sendeeinrichtung TX, eine Empfangseinrichtung RX und eine Steuereinrichtung SE enthält.

Die Steuereinrichtung SE ermittelt Synchronisationssequenzen SYNC I..IV und Sendezeitpunkte p1..p8 und weist die Sendeeinrichtung TX an, die Synchronisationssequenzen SYNC I..IV zeitgerecht zu senden. Die Sendesignale mit den Synchronisationssequenzen SYNC I..IV werden über den Duplexer DX und die Antenne AE abgestrahlt.

## Patentansprüche

1. Verfahren zur Signalisierung in einem Kanal mit willkürlichem Zugriff (RACH) eines Funk-Kommunikationssystems, bei dem Teilnehmerstationen (MS) und Basisstationen (BS) über eine gemäß einem TDMA-Teilnehmerseparierungsverfahren organisierte Funkschnittstelle miteinander verbindbar sind, Teilnehmerstationen (MS) im Kanal mit willkürlichem Zugriff (RACH) Synchronisationssequenzen (SYNC I) zur Basisstation (BS) senden, ohne daß ihnen zuvor Ressourcen in diesem Kanal zugewiesen wurden,
**dadurch gekennzeichnet,**
**daß** die Teilnehmerstation (MS) unter mehreren Sendezeitpunkten (p1..p8) für die Synchronisationssequenzen (SYNC I) innerhalb eines Zeitschlitzes (ts) des Kanals mit willkürlichem Zugriff (RACH) auswählt, und
einen oder mehrere ausgewählte Sendezeitpunkte (p1..p8) zur Übertragung von Synchronisationssequenzen (SYNC I..IV) benutzt.

2. Verfahren nach Anspruch 1, **dadurch gekennzeichnet, daß** die Teilnehmerstation (MS) zu mehreren Sendezeitpunkten (p1..p8) die gleiche Synchronisationssequenz (SYNC I) sendet.

3. Verfahren nach Anspruch 1, **dadurch gekennzeichnet, daß** die Teilnehmerstation (MS) zu mehreren Sendezeitpunkten (p1..p8) unterschiedliche Synchronisationssequenzen (SYNC I..IV) sendet.

4. Verfahren nach Anspruch 3, **dadurch gekennzeichnet, daß** durch die Abfolge der Synchronisationssequenzen (SYNC I..IV) eine Information übertragen wird.

5. Verfahren nach Anspruch 3, **dadurch gekennzeichnet, daß** die Abfolge der Synchronisationssequenzen (SYNC I..IV) willkürlich gewählt wird.

6. Verfahren nach einem der vorherigen Ansprüche, **dadurch gekennzeichnet, daß** der oder die Sendezeitpunkte (p1..p8) von der Teilnehmerstation (MS) willkürlich gewählt wird.

7. Verfahren nach einem der vorherigen Ansprüche, **dadurch gekennzeichnet, daß** die Aussendungen der Teilnehmerstationen (MS) von der Basisstation (BS) ausgewertet werden und durch die Basisstation (BS) eine richtungsselektive Antwort zu den einzelnen Teilnehmerstationen (MS) gesendet wird.

8. Verfahren nach Anspruch 7, **dadurch gekennzeichnet, daß** von der Basisstation (BS) bei erkannten Kollisionen von Aussendungen mit gleicher Synchronisationssequenz (SYNC I) zweier Teilnehmerstationen (MS) eine Aufforderung zum erneuten Senden übertragen wird.

9. Verfahren nach Anspruch 8, **dadurch gekennzeichnet, daß** die Aufforderung eine Referenz auf den Sendezeitpunkt (p1..p8) und/oder die Synchronisationssequenz (SYNC I) der Kollision beinhaltet.

10. Verfahren nach einem der vorherigen Ansprüche, **dadurch gekennzeichnet, daß** der Kanal mit willkürlichem Zugriff (RACH) durch einen Zeitschlitz (ts) und einen Spreizkode (c0) gebildet wird.

11. Verfahren nach Anspruch 10, **dadurch gekennzeichnet, daß** erst bei folgenden Aussendungen der Teilnehmerstation (MS), die von der Basisstation (BS) gerichtet empfangen werden, Informationen von Schichten 2 oder 3 des OSI-Schichtenmodells übertragen werden.

12. Verfahren nach einem der vorherigen Ansprüche, **dadurch gekennzeichnet, daß** die Basisstation (BS) in einem Organisationskanal (BCCH) den Teilnehmerstationen (MS) signalisiert, ob Antennen mit veränderbarer Richtcharakteristik verfügbar sind.

13. Verfahren nach Anspruch 12, **dadurch gekennzeichnet, daß** die Teilnehmerstationen (MS) abhängig von der Signalisierung im Organisationskanal (BCCH) zwischen zumindest zwei Zugriffsverfahren im Kanal mit willkürlichem Zugriff (RACH) auswählt.

14. Verfahren nach einem der vorherigen Ansprüche, **dadurch gekennzeichnet, daß** die Funkschnittstelle nach einer TDD-Separierung der Übertragungsrichtungen organisiert ist und die Synchronisationssequenzen (SYNC I) zumindest teilweise im Übergang von der Abwärts- (DL) zur Aufwärtsrichtung (UL) gesendet werden.

15. Teilnehmerstation (MS) für ein Funk-Kommunikationssystem, die über eine gemäß einem TDMA-Teilnehmerseparierungsverfahren organisierte Funkschnittstelle mit einer Basisstation (BS) verbindbar ist,
mit einer Sendeeinrichtung (TX) zum Senden von Synchronisationssequenzen (SYNC I) zur Basisstation (BS) in einem Kanal mit willkürlichem Zugriff (RACH), ohne daß ihr zuvor Ressourcen in diesem Kanal zugewiesen wurden,
**gekennzeichnet durch**
eine Steuereinrichtung (SE) zum Auswählen unter mehreren Sendezeitpunkten (p1..p8) für die Synchronisationssequenzen (SYNC I) innerhalb eines Zeitschlitzes (ts) des Kanals mit willkürlichem Zugriff (RACH) und zum Steuern der Sendeeinrichtung (TX) zur Benutzung von einem oder mehreren ausgewählten Sendezeitpunkten (p1..p8) zur Übertragung der Synchronisationssequenzen (SYNC I..IV).

## Claims

1. Method for signalling in a random access channel (RACH) in a radio communication system,
in which
subscriber stations (MS) and base stations (BS) can be connected to one another via a radio interface organized on the basis of a TDMA subscriber separation method,
subscriber stations (MS) transmit synchronization sequences (SYNC I) to the base station (BS) in the random access channel (RACH) without their previously having been allocated resources in this channel,
**characterized**
**in that** the subscriber station (MS) selects from a plurality of transmission times (p1..p8) for the synchronization sequences (SYNC I) within a time slot (ts) of the random access channel (RACH), and uses one or more selected transmission times (p1..p8) to transmit synchronization sequences (SYNC I..IV).

2. Method according to Claim 1, **characterized in that** the subscriber station (MS) transmits the same synchronization sequence (SYNC I) at a plurality of transmission times (p1..p8).

3. Method according to Claim 1, **characterized in that** the subscriber station (MS) transmits different synchronization sequences (SYNC I..IV) at a plurality of transmission times (p1..p8).

4. Method according to Claim 3, **characterized in that** the order of the synchronization sequences (SYNC I..IV) transmits information.

5. Method according to Claim 3, **characterized in that** the order of the synchronization sequences (SYNC I..IV) is chosen randomly.

6. Method according to one of the preceding claims, **characterized in that** the transmission time(s) (p1..p8) is chosen randomly by the subscriber station (MS).

7. Method according to one of the preceding claims, **characterized in that** the transmissions from the subscriber stations (MS) are evaluated by the base station (BS), and the base station (BS) transmits a directionally selective response to the individual subscriber stations (MS).

8. Method according to Claim 7, **characterized in that**, in the event of collisions being detected between transmissions with the same synchronization sequence (SYNC I) from two subscriber stations (MS), the base station (BS) transmits a request for renewed transmission.

9. Method according to Claim 8, **characterized in that** the request contains a reference to the transmission time (p1..p8) and/or the synchronization sequence (SYNC I) of the collision.

10. Method according to one of the preceding claims, **characterized in that** the random access channel (RACH) is formed by a time slot (ts) and a spread code (c0).

11. Method according to Claim 10, **characterized in that** only upon subsequent transmissions from the subscriber station (MS) which are received directionally by the base station (BS) is information transmitted from layers 2 or 3 of the OSI layer model.

12. Method according to one of the preceding claims, **characterized in that** the base station (BS) signals to the subscriber stations (MS) in an organization channel (BCCH) whether antennas having a variable directional characteristic are available.

13. Method according to Claim 12, **characterized in that** the subscriber stations (MS) select between at least two methods of accessing the random access channel (RACH) on the basis of the signalling in the organization channel (BCCH).

14. Method according to one of the preceding claims, **characterized in that** the radio interface is organized on the basis of TDD separation of the transmission directions, and the synchronization sequences (SYNC I) are transmitted at least in part in the transition from the downlink (DL) to the uplink (UL).

15. Subscriber station (MS) for a radio communication system, which subscriber station can be connected to a base station (BS) via a radio interface organized on the basis of a TDMA subscriber separation method,
having a transmission device (TX) for transmitting synchronization sequences (SYNC I) to the base station (BS) in a random access channel (RACH) without its previously having been allocated resources in this channel,
**characterized by**
a control device (SE) for selecting from a plurality of transmission times (p1..p8) for the synchronization sequences (SYNC I) within a time slot (ts) of the random access channel (RACH) and for controlling the transmission device (TX) for the purpose of using one or more selected transmission times (p1..p8) to transmit the synchronization sequences (SYNC I..IV).

## Revendications

1. Procédé de signalisation dans un canal à accès aléatoire (RACH) d'un système de communication par radio, tel que des stations d'abonnés (MS) et des stations de base (BS) peuvent être raccordées les unes aux autres par l'intermédiaire d'une interface radio organisée selon un procédé AMRT de séparation des abonnés, tel que des stations d'abonnés (MS) émettent, dans le canal à accès aléatoire (RACH), des séquences de synchronisation en direction de la station de base, sans que des ressources aient déjà été affectées à ces séquences à l'intérieur dudit canal,
**caractérisé en ce que**
la station d'abonné (MS) choisit parmi plusieurs moments d'émission (p1..p8) des séquences de synchronisation (SYNC I), dans un intervalle de temps (ts) du canal à accès aléatoire, et **en ce que** un ou plusieurs moment(s) d'émission sélectionné(s) (p1..p8) est (sont) utilisé(s) pour la transmission de séquences de synchronisation (SYNC I..IV).

2. Procédé selon la revendication 1, **caractérisé en ce que** la station d'abonné (MS) émet la même séquence de synchronisation (SYNC I) à divers moments (p1..p8).

3. Procédé selon la revendication 1, **caractérisé en ce que** la station d'abonné (MS) émet des séquences de synchronisation différentes (SYNC I..IV) à divers moments (p1..p8).

4. Procédé selon la revendication 3, **caractérisé en ce que** une information est transmise grâce à la succession des séquences de synchronisation (SYNC I..lV).

5. Procédé selon la revendication 3, **caractérisé en ce que** la succession des séquences de synchronisation (SYNC I..IV) est choisie de façon aléatoire.

6. Procédé selon une des revendications précédentes, **caractérisé en ce que** le (les) moment(s) d'émission (p1..p8) est (sont) choisi(s) arbitrairement par la station d'abonné (MS).

7. Procédé selon une des revendications précédentes, **caractérisé en ce que** les émissions des stations d'abonnés (MS) sont évaluées par la station de base (BS) et **en ce que** cette station de base (BS) émet une réponse en direction des différentes stations d'abonnés (MS), de manière sélective.

8. Procédé selon la revendication 7, **caractérisé en ce que**, lorsque des collisions d'émissions avec une même séquence de synchronisation (SYNC I) de deux stations d'abonnés MS) sont identifiées, la station de base transmet une instruction de ré-émission.

9. Procédé selon la revendication 8, **caractérisé en ce que** l'instruction comprend une référence au moment d'émission (p1..p8) et / ou à la séquence de synchronisation (SYNC I) de la collision.

10. Procédé selon une des revendications précédentes, **caractérisé en ce que** le canal à accès aléatoire (RACH) est formé par l'intermédiaire d'un intervalle de temps (ts) et d'un code de répartition (c0).

11. Procédé selon la revendication 10, **caractérisé en ce que** les informations des couches 2 ou 3 du modèle en couches OSI ne sont transmises que lors des émissions suivantes de la station d'abonné (MS) reçues de manière ciblée par la station de base (BS).

12. Procédé selon une des revendications précédentes, **caractérisé en ce que** dans un canal de contrôle de radiodiffusion (BCCH), la station de base (BS) signale aux stations d'abonnés (MS) si des antennes à caractéristique directionnelle modifiable sont disponibles.

13. Procédé selon la revendication 12, **caractérisé en ce que** les stations d'abonnés (MS) choisissent entre au moins deux procédés d'accès du canal à accès aléatoire (RACH), en fonction de la signalisation dans le canal de contrôle de radiodiffusion.

14. Procédé selon une des revendications précédentes, **caractérisé en ce que** l'interface radio a été organisée sur la base d'une séparation des directions de transmission par duplexage temporel (TDD), et **en ce que** les séquences de synchronisation (SYNC I) sont émises au moins partiellement lors du passage de la liaison descendante (DL) à la liaison montante (UL).

15. Station d'abonné (MS) pour système de communication par radio pouvant être raccordée à une station de base (BS) par l'intermédiaire d'une interface radio organisée selon un procédé AMRT de séparation des abonnés, équipée d'un dispositif d'émission (TX) de séquences de synchronisation (SYNC I) vers la station de base (BS), dans un canal à accès aléatoire et sans que des ressources aient déjà été attribuées au dit dispositif dans ce canal, et **caractérisée par** un dispositif de commande (SE) destiné, d'une part, à opérer une sélection parmi plusieurs moments d'émission (p1..p8) des séquences de synchronisation (SYNC I), dans un intervalle de temps (ts) du canal à accès aléatoire (RACH), et d'autre part, à commander le dispositif d'émission (TX) en vue de l'utilisation d'un ou plusieurs moment(s) d'émission (p1..p8) sélectionnés pour la transmission des séquences de synchronisation (SYNC I..IV).
